# EUROPÄISCHE PATENTSCHRIFT

(11) **EP 0 304 855 B1**
(45) Veröffentlichungstag und Bekanntmachung des Hinweises auf die Patenterteilung: **13.01.1993**
(21) Anmeldenummer: 88113666.7
(22) Anmeldetag: 23.08.1988
(51) Int. Cl.: B23K 9/04, B23K 28/00

(54) **Plasma-Heissdraht-Auftragschweissen**
Hot wire plasma surfacing
Rechargement par fil chaud par plasma

(30) Priorität: 26.08.1987 DE 3728473
(43) Veröffentlichungstag der Anmeldung: 01.03.1989
(73) Patentinhaber: VALCO EDELSTAHL UND SCHWEISSTECHNIK GMBH, D-40512 Düsseldorf (DE)
(72) Erfinder: Draugelates, Ulrich, Prof.Dr.-Ing., D-3380 Goslar (DE); Bouaifi, Belkacem, Dipl.-Ing., D-3421 Hörden (DE); Krohn, Jens, Dr.-Ing., D-8721 Kolitzheim 1 (DE)
(74) Vertreter: Gramm, Werner, Prof., Dipl.-Ing.

(56) Entgegenhaltungen:
- DE-B- 1 066 676
- GB-A- 1 027 504
- METAL CONSTRUCTION AND BRITISH WELDING JOURNAL, Band 4, Nr. 11, 1972, Seiten 408-411, Welding Institute, Cambridge, GB; L.F. LEE: "Hot-wire methods of surfacing and submerged-arc welding"

## Beschreibung

Die Erfindung betrifft ein Auftragschweißverfahren als Plasma-Heißdraht-Auftragschweißen, bei dem das Anschmelzen des Grundwerkstoffes durch einen oszillierenden, mit nicht abschmelzender Elektrode arbeitenden Plasmabrenner mit übertragenem Lichtbogen erfolgt, während der Beschichtungswerkstoff in Form eines Drahtes oder zweier Drähte im Nachlauf des Plasmabrenners zugeführt und im direkten Stromdurchgang mit Hilfe des Heißdrahtprinzips unmittelbar unter Schmelztemperatur aufgeheizt werden.

Der Grundgedanke dieses PHA-Verfahrens ist die Trennung des Anschmelzens des Grundwerkstoffes und des Schmelzens des Zusatzwerkstoffes zum Auftragschweißen. Bedingt durch die Trennung der zum Auftragschweißen erforderlichen Funktionen ist im Verhältnis zu anderen Verfahren ein geringerer Energiebetrag zum Anschmelzen des Grundwerkstoffes erforderlich. Dadurch kann der Plasmabrenner mit verhältnismäßig geringer Energie betrieben werden, was sich günstig auf die Ausbildung des Gefüges von Grundwerkstoff und Plattierung sowie auf die Breite der Wärmeeinflußzone auswirkt. Einbrandtiefe und Auftragdicke lassen sich unabhängig voneinander über den Plasmastrom und die Heißdrahtleistung und -zufuhr variieren.

Bei herkömmlichen Verfahren mit großen Einbränden, großen Aufmischungsgraden und Abbränden der Legierungselemente kann ein Ausgleich der Legierungszusammensetzung der Auftragschweißung nur durch ein Überlegieren des Beschichtungswerkstoffes erreicht werden. Andernfalls ist es notwendig, durch mehrere Lagen die gewünschten Eigenschaften an der Oberfläche einzustellen. Da beim PHA-Verfahren nur ein geringer Abbrand auftritt und die Aufmischung auf sehr kleine Werte eingestellt werden kann, werden die gewünschten Eigenschaften der Auftragschweißung häufig bereits in der ersten oder zweiten Lage erreicht.

Die mit den eingangs erläuterten Auftragschweißverfahren hergestellten Verbundsysteme aus einem mechanisch festen metallischen Grundwerkstoff und einer metallischen Schutzschicht mit gegenüber dem Grundwerkstoff erhöhter Beständigkeit finden insbesondere bei korrosions-, oxidations- und verschleißbeanspruchten Bauteilen Anwendung.

Der Erfindung liegt die Aufgabe zugrunde, bei einem Auftragschweißverfahren der eingangs erläuterten Art die Wärmeeinbringung in den Grundwerkstoff noch weiter zu verringern, wobei der metallische Verbund allen Anforderungen an die mechanisch-technologischen Eigenschaften und die Beständigkeit gegen Korrosion, Oxidation oder Verschleiß genügen muß.

Diese Aufgabe wird gemäß der Erfindung durch folgende Merkmale gelöst:
a) Zu einer stabilen Prozeßführung werden zumindest die Plasma- und Schutzgas-Versorgung, die Plasmastromquelle mit HF-Zündung, die Pendelbewegung des Plasmabrenners, der Drahtvorschub sowie die Heißdrahtstromquelle nach Maßgabe eines vorgegebenen Prozeßablaufes prozeßrechnergesteuert zeitlich abgestimmt und koordiniert zur Herstellung von Schichten mit einer Lagendicke < 3 mm und einer Aufmischung < 10 % ;
b) der Plasmalichtbogen wird einer definierten, nicht rotationssymmetrischen Einschnürung unterworfen;
c) für den Beschichtungswerkstoff wird ein Draht mit einem Durchmesser von 0,8 bis 2,4 mm verwendet;
d) die Plasmastromstärke wird zwischen 220 und 300 A und die Plasmaspannung zwischen 35 und 50 V gehalten;
e) die Heißdrahtstromstärke wird zwischen 80 und 150 A und die Heißdrahtspannung zwischen 10 und 25 V gehalten;
f) der Drahtvorschub wird zwischen 2 und 8 m/min gefahren.

Zur Erzielung einer stabilen Prozeßführung werden die verfahrenstechnischen Parameter mit Hilfe eines Prozeßrechners und einer entsprechenden Software-Entwicklung optimal aufeinander abgestimmt. Dadurch ist es erfindungsgemäß möglich, das Verfahren in einem weiten Parameterbereich je nach Verwendungszweck mit Aufmischungen zwischen 5 und 60 % , Schichtdicken zwischen 3 und 7,5 mm, Flächenleistungen zwischen 40 und 70 dm²/h sowie Abschmelzleistungen zwischen 10 und 30 kg/h zu betreiben. Die Energieeinbringung kann dabei so verringert werden, daß ein Auftragen ohne metallurgische Bindung erfolgen kann. Durch gezielte Beeinflussung der Benetzungsbedingungen und der Wärmeeinbringung beim Auftragschweißen läßt sich eine fehlerfreie Verbindung der Komponenten unter minimaler metallurgischer Beeinflussung des Zusatzwerkstoffes noch weiter verbessern. Die wesentlichen Vorteile liegen in der Verringerung der Wärmeeinbringung und Aufmischung, ohne dabei die Gefahr von Bindefehlern in Kauf nehmen zu müssen. Unabhängig von der Art der metallurgischen Komponenten des Verbundes, die über ihre Oberflächenenergien den Benetzungsvorgang beeinflussen, und der Wärmeeinbringung sowie dem Erstarrungsverlauf, die die mögliche Wirkung von Diffusionsvorgängen und weitere metallurgische Reaktion beeinflussen, ist es durch die Erfindung erstmals möglich, Auftragschweißungen ohne direkte Aufschmelzung des Grundwerkstoffs durch den Plasma-Lichtbogen zu ermöglichen.

Die mit dem erfindungsgemäßen Verfahren hergestellten Plattierungen bzw. Panzerungen mit Schichtdicken unter 2 mm und Aufmischungswerten weit unter 5 % sind qualitativ gleichwertig zu bisher notwendigen 10 bis 15 mm dicken Schichten.

Zur Ausführung eines sicheren Zündvorganges auch ohne Zuhilfenahme einer Hochfrequenzzündeeinheit ist es vorteilhaft, wenn zusätzlich eine Verschiebung des Plasmabrenners innerhalb einer Schutzgaskammer prozeßrechnergesteuert ist.

Zur Verbesserung der Benetzungsbedingungen wird als Stromquelle für den Plasma-Lichtbogen eine Wechselstromquelle mit einstellbarer Dauer der Perioden der positiven und negativen Halbwelle und als Erweiterung einer möglichen getrennten Einstellung der Stromstärken der positiven bzw. negativen Halbwelle eingesetzt.

Zur weiteren Verbesserung des Beschichtungsverfahrens dient die bereits vorstehend erwähnte nicht rotationssymmetrische Einschnürung des Plasma-Lichtbogens und/oder eine Beeinflussung der Drahtzufuhr.

Es ist vorteilhaft, wenn zusätzlich die Wasserkühlung des Plasmabrenners sowie die Brennerhöhenpositionierung prozeßrechnergesteuert sind.

Die Schweißgeschwindigkeit liegt vorzugsweise zwischen 10 und 30 cm/min. Als Plasmagas wird vorzugsweise ein Gemisch aus 75 % Helium und 25 % Argon und als Schutzgas ein Gemisch aus 85 & Argon und 15 % H₂ verwendet.

Als Stromquelle für den Plasma-Lichtbogen wird eine Stromquelle mit rechteckiger Wechselstromperiode verwendet, deren Polaritätszeiten innerhalb einer Periode verstellbar sind, die die Steuerung des Einbrandes und der Reinigungswirkung bewirken, wobei für einen maximalen Einbrand ein Anteil der negativen Halbwellenzeit von 60 bis 80 % und für einen maximalen Reinigungseffekt ein Anteil der positiven Halbwellenzeit von 45 bis 65 % eingestellt werden.

In den Figuren sowie der Tabelle sind Ausführungsbeispiele der Erfindung näher erläutert.

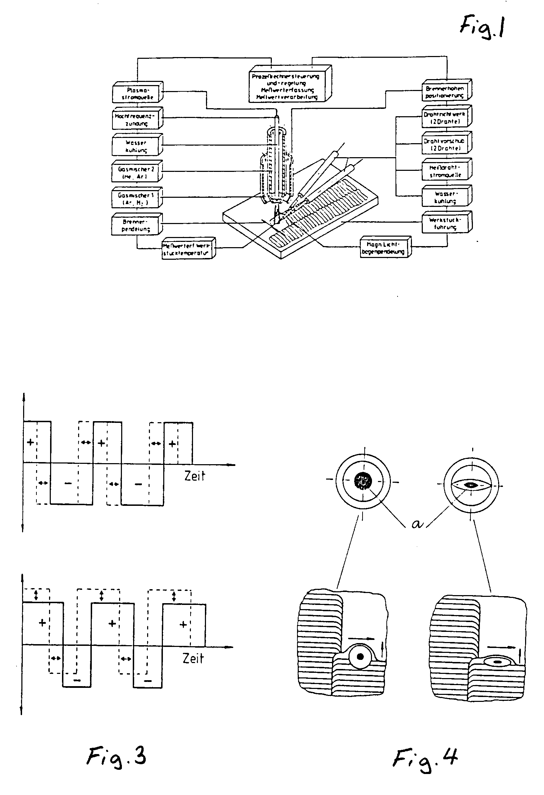

Figur 1 zeigt eine schematische Konzeptdarstellung einer Auftragschweißanlage. In eine Prozeßrechnersteuerung und -regelung, Meßwerterfassung und Meßwertverarbeitung werden folgende Meßwerte eingegeben: Plasmastromquelle, Hochfrequenzzündung, Wasserkühlung, Gasmischer (Helium und Argon), Gasmischer (Argon und H₂), Brennerpendelung, Werkstücktemperatur, Brennerhöhenpositionierung, Drahtrichtwerk (2 Drähte), Drahtvorschub (2 Drähte), Heißdrahtstromquelle, Wasserkühlung, Werkstückführung und magn. Lichtbogenpendelung.

Figur 2 zeigt eine Prozeßführung mit Steuer- und Regelvorgängen für Wasserkühlung, Schutzgas, Plasmagas, HF-Zündung, Pilotstrom, Plasmastrom, Pendelung, Drahtgeschwindigkeit, Heißdrahtstrom, Werkstückbewegung und Höhenpositionierung.

Figur 3 verdeutlicht den Einfluß der Halbwellenanteile beim Auftragschweißen mit rechteckförmigem Wechselstrom. In der Lotrechten ist jeweils die Polung der Elektrode eingetragen. Die obere Darstellung zeigt veränderbare Polaritätszeiten innerhalb einer Wechselstromperiode, während die untere Darstellung veränderbare Polaritätszeiten und Stromamplituden innerhalb einer Wechselstromperiode verdeutlicht.

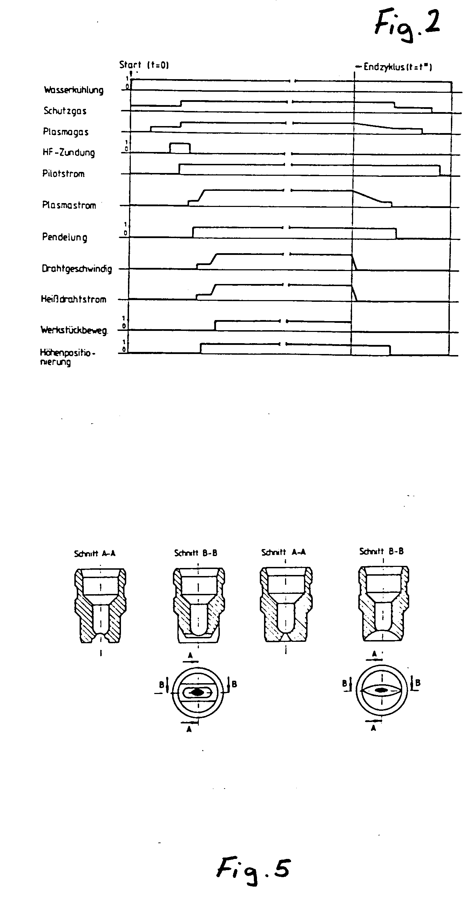

Figur 4 läßt die Beeinflussung der Form und der Leistungsverteilung des Plasmastrahls mit einer Rundstrahldüse (linke Darstellung) und mit einer Flachstrahldüse (rechte Darstellung) erkennen. Die Austrittsöffnung der in Figur 4 dargestellten Düsen ist jeweils mit a bezeichnet. Figur 5 zeigt zwei Ausführungsbeispiele für die erfindungsgemäß bevorzugten Flachstrahldüsen.

Die Tabelle enthält ein Beispiel für eine Prozeßführung bei einem erfindungsgemäßen Plasma-Heißdraht-Auftragschweißen mit Wechselstrom.

**Tabelle**

| | | | Beginn - Ende |
|---|---|---|---|
| Gasgemisch Kammer | 90 : 10 | | |
| Gasvorstrom Kammer | 30 l/min | Vorströmzeit | 0 - 3 s |
| Gasgemisch Brenner | 80 : 20 | | |
| Gasvorstrom Brenner | 30 l/min | Vorströmzeit | 2 - 3 s |
| Gasgemisch Plasma | 25 : 75 | | |
| Gasvorstrom Plasma | 30 l/min | Vorströmzeit | 2 - 3 s |
| Pilotstrom | 5 A | Zündzeit | 2,5- 3 s |
| Brennerhöhe | 20 mm | | |
| Plasmaspannung | 42 V | | |
| Startstrom | 20 A | | |
| Schweißstrom Plasma | 200 A | Anstiegzeit | 3 - 6 s |
| max. Einbrand bei 60-80 % | | | |
| der neg. Halbwellenzeit | | | |
| max. Reinigung bei 45-65 % | | | |
| der pos. Halbwellenzeit | | | |
| Gasstrom Kammer | 37 l/min | Anstiegzeit | 3 - 4 s |
| Gasstrom Brenner | 37 l/min | Anstiegzeit | 3 - 4 s |
| Gasstrom Plasma | 37 l/min | Anstiegzeit | 3 - 4 s |
| Pendelgeschwindigkeit Start | 10 1/min | | |
| Pendelgeschwindigkeit Schweißen | 50 1/min | Anstiegzeit | 3 -3,5 s |
| Drahtgeschwindigkeit Start | 1,5 m/min | | |
| Drahtgeschwindigkeit Schweißen | 4 m/min | Anstiegzeit | 8 - 10 s |
| Heißdrahtspannung Start | 20 V | | |
| Heißdrahtspannung Schweißen | 20 V | Anstiegzeit | |
| Heißdrahtstrom Start | 20 A | | 9 s |
| Heißdrahtstrom Schweißen | l20 A | Anstiegzeit | 9 - 10 s |
| Schweißgeschwindigkeit Start | 5 cm/min | | 9 s |
| Schweißgeschwindigkeit Schweißen | 16 cm/min | Anstiegzeit | 9 - 10 s |
| Schweißen | | Schweißzeit | |
| Schweißgeschwindigkeitsabfall | | Abfallzeit | 0 - 1 s |
| Heißdrahtstromabfall | 20 A | Anfallzeit | 0 - 1 s |
| Heißdrahtgeschwindigkeitsabfall | | Abfallzeit | 0 - 1 s |
| Übergangsstrom Plasma | 40 A | Übergangszeit | 1 -1,1 s |
| Endstrom Plasma | 20 A | Abfallzeit | 1,1- 5 s |
| Pendelgeschwindigkeit Stop | | | 5 s |
| Gasstrom Kammer Stop | | | 6 |
| Gasstrom Brenner Stop | | | 6 |
| Gasstrom Plasma Stop | | | 6 |
| Gasnachstrom Kammer | 40 l/min | Nachströmzeit | 6 - 15 s |
| Gasnachstrom Brenner | 25 l/min | Nachströmzeit | 6 - 8 s |
| Gasnachstrom Plasma | 20 l/min | Nachströmzeit | 6 - 8 s |

## Patentansprüche

1. Auftragschweißverfahren als Plasma-Heißdraht-Auftragschweißen, bei dem das Anschmelzen des Grundwerkstoffes durch einen oszillierenden, mit nicht abschmelzender Elektrode arbeitenden Plasmabrenner mit übertragenem Lichtbogen erfolgt, während der Beschichtungswerkstoff in Form eines Drahtes oder zweier Drähte im Nachlauf des Plasmabrenners zugeführt und im direkten Stromdurchgang mit Hilfe des Heißdrahtprinzips unmittelbar unter Schmelztemperatur aufgeheizt werden, **gekennzeichnet** durch folgende Merkmale:
a) Zu einer stabilen Prozeßführung werden zumindest die Plasma- und Schutzgas-Versorgung, die Plasmastromquelle mit HF-Zündung, die Pendelbewegung des Plasmabrenners, der Drahtvorschub sowie die Heißdrahtstromquelle nach Maßgabe eines vorgegebenen Prozeßablaufes prozeßrechnergesteuert zeitlich abgestimmt und koordiniert zur Herstellung von Schichten mit einer Lagendicke < 3 mm und einer Aufmischung < 10 % ;
b) der Plasmalichtbogen wird einer definierten, nicht rotationssymmetrischen Einschnürung unterworfen;
c) für den Beschichtungswerkstoff wird ein Draht mit einem Durchmesser von 0,8 bis 2,4 mm verwendet;
d) die Plasmastromstärke wird zwischen 220 und 300 A und die Plasmaspannung zwischen 35 und 50 V gehalten;
e) die Heißdrahtstromstärke wird zwischen 80 und 150 A und die Heißdrahtspannung zwischen 10 und 25 V gehalten;
f) der Drahtvorschub wird zwischen 2 und 8 m/min gefahren.

2. Verfahren nach Anspruch 1, dadurch gekennzeichnet, daß zusätzlich die Wasserkühlung des Plasmabrenners sowie die Brennerhöhenpositionierung prozeßrechnergesteuert sind.

3. Verfahren nach Anspruch 1 oder 2, dadurch gekennzeichnet, daß zur Ausführung eines sicheren Zündvorganges zusätzlich eine Verschiebung des Plasmabrenners innerhalb einer Schutzgaskammer prozeßrechnergesteuert ist.

4. Verfahren nach Anspruch 1, 2 oder 3, dadurch gekennzeichnet, daß die Schweißgeschwindigkeit zwischen 10 und 30 cm/min liegt.

5. Verfahren nach einem der vorhergehenden Ansprüche, dadurch gekennzeichnet, daß als Plasmagas ein Gemisch aus 75 % He und 25 % Ar verwendet wird.

6. Verfahren nach einem der vorhergehenden Ansprüche, dadurch gekennzeichnet, daß als Schutzgas ein Gemisch aus 85 % Ar und 15 % H₂ verwendet wird.

7. Verfahren nach einem der vorhergehenden Ansprüche, dadurch gekennzeichnet, daß als Stromquelle für den Plasmalichtbogen eine Stromquelle mit rechteckiger Wechselstromperiode verwendet wird, deren Polaritätszeiten innerhalb einer Periode verstellbar sind.

8. Verfahren nach Anspruch 7, dadurch gekennzeichnet, daß für einen maximalen Einbrand ein Anteil der negativen Halbwellenzeit von 60 bis 80 % eingestellt wird.

9. Verfahren nach Anspruch 7 oder 8, dadurch gekennzeichnet, daß für einen maximalen Reinigungseffekt ein Anteil der positiven Halbwellenzeit von 45 bis 65 % eingestellt wird.

10. Verfahren nach Anspruch 7, 8 oder 9, dadurch gekennzeichnet, daß die Stromstärken der positiven und negativen Halbwellen getrennt eingestellt werden.

11. Verfahren nach Anspruch 10, dadurch gekennzeichnet, daß die Stromstärke der positiven Halbwelle zwischen 100 und 200 A eingestellt wird.

12. Verfahren nach Anspruch 10 oder 11, dadurch gekennzeichnet, daß die Stromstärke der negativen Halbwelle zwischen 250 und 300 A eingestellt wird.

13. Verfahren nach einem der vorhergehenden Ansprüche, gekennzeichnet durch die Verwendung von zwei Drähten, die V-förmig in Schräglage zum Werkstück zugeführt werden.

## Claims

1. A process for build-up welding as hot wire plasma build-up welding, in which the base material is fused by an oscillating plasma torch operating with a non-consumable electrode with a transmitted arc, while the coating material is fed in the form of a wire or two wires following the plasma torch and is heated to immediately below melting temperature in the direct flow of current by the hot wire principle, characterised by the following features:
a. In order to perform the process in a stable manner, at least the supply of plasma and protective gas, the source of plasma current with HF ignition, the swinging movement of the plasma torch, the advance of the wire and the source of current for the hot wire are matched with respect to time and coordinated, by the control of a process computer, in accordance with a predetermined processing sequence to produce coatings having a layer thickness of < 3 mm and a mixing of < 10%;
b. the plasma arc is subjected to a defined, non-rotational symmetrical contraction;
c. a wire having a diameter of from 0.8 to 2.4 mm is used for the coating material;
d. the intensity of the plasma current is kept between 220 and 300 A and the plasma voltage is kept between 35 and 50 V;
e. the intensity of the hot wire current is kept between 80 and 150 A and the hot wire voltage is kept between 10 and 25 V;
f. the wire is advanced at a rate between 2 and 8 m/min.

2. A process as claimed in claim 1, characterised in that the water-cooling of the plasma torch and the vertical positioning of the torch are also controlled by a process computer.

3. A process as claimed in claim 1 or 2, characterised in that displacement of the plasma torch within a protective gas chamber is also controlled by a process computer for the purpose of performing a reliable ignition operation.

4. A process as claimed in claim 1, 2 or 3, characterised in that the welding rate lies between 10 and 30 cm/min.

5. A process as claimed in one of the preceding claims, characterised in that a mixture of 75% He and 25% Ar is used as plasma gas.

6. A process as claimed in one of the preceding claims, characterised in that a mixture of 85% Ar and 15% H₂ is used as protective gas.

7. A process as claimed in one of the preceding claims, characterised in that a source of current having a square-wave a.c. cycle, and whose polarity times are adjustable within one cycle, is used as the source of current for the plasma arc.

8. A process as claimed in claim 7, characterised in that a proportion of the negative half-wave time of from 60 to 80% is set for a maximum penetration.

9. A process as claimed in claim 7 or 8, characterised in that a proportion of the positive half-wave time of from 45 to 65% is set for a maximum cleaning effect.

10. A process as claimed claim 7, 8 or 9, characterised in that the current intensities of the positive and negative half waves are set separately.

11. A process as claimed in claim 10, characterised in that the current intensity of the positive half wave is set between 100 and 200 A.

12. A process as claimed in claim 10 or 11, characterised in that the current intensity of the negative half wave is set between 250 and 300 A.

13. A process as claimed in one of the preceding claims, characterised by the use of two wires which are fed to the workpiece in a V-shape in a sloping position.

## Revendications

1. Procédé de soudage par rechargement du type soudage à fil chaud et jet de plasma , dans lequel la fusion du métal de base s'effectue au moyen d'un brûleur à plasma oscillant fonctionnant avec une électrode non consommable et avec arc transféré, tandis que le métal d'apport est apporté derrière le brûleur à plasma, sous la forme d'un ou de deux fils, et est chauffé par passage direct du courant électrique, selon le principe du fil chaud,au-dessous de la température de fusion, caractérisé par les particularités suivantes :
a) afin que le processus se déroule d'une manière stable, on définit chronologiquement, par ordinateur, selon un programme prédéterminé, au moins l'alimentation en plasma et en gaz de protection, la source de courant pour le plasma avec allumage HF, le mouvement pendulaire du brûleur à plasma, l'avance du fil ainsi que la source de courant pour le fil chaud, et on coordonne toutes ces données pour obtenir des couches d'une épaisseur inférieure à 3 mm et d'un taux de mélange inférieur à 10%;
b) on soumet l'arc à plasma à un rétrécissement défini, non symétrique ;
c) comme métal d'apport, on utilise un fil d'un diamètre de 0,8 à 2,4 mm ;
d) on maintient l'intensité du courant pour le plasma entre 220 et 300 A et la tension entre 35 et 50 V ;
e) on maintient l'intensité du courant pour le fil chaud entre 80 et 150 A et la tension entre 10 et 25 V ;
f) on règle l'avance du fil entre 2 et 8 m/min.

2. Procédé selon la revendication 1, caractérisé en ce que le refroidissement par eau du brûleur à plasma ainsi que le positionnement de la hauteur de ce brûleur sont également commandés par ordinateur.

3. Procédé selon la revendication 1 ou 2, caractérisé en ce que, pour que la procédure d'allumage s'effectue en toute sécurité, le déplacement du brûleur à plasma à l'intérieur d'une chambre contenant le gaz de protection est commandé également par ordinateur.

4. Procédé selon la revendication 1, 2 ou 3, caractérisé en ce que la vitesse de soudage se situe entre 10 et 30 cm/min.

5. Procédé selon l'une des revendications précédentes, caractérisé en ce que l'on utilise comme gaz de plasma un mélange constitué de 75 % de He et de 25 % d'Ar.

6. Procédé selon l'une des revendications précédentes, caractérisé en ce que l'on utilise comme gaz de protection un mélange constitué de 85 % d'Ar et de 15 % de H₂.

7. Procédé selon l'une des revendications précédentes, caractérisé en ce que l'on utilise comme source de courant pour l'arc à plasma une source de courant alternatif à période rectangulaire dont les temps de polarité à l'intérieur d'une période sont réglables.

8. Procédé selon la revendication 7, caractérisé en ce que, pour obtenir une pénétration maximale, on règle la proportion des demi-ondes négatives de 60 à 80 %.

9. Procédé selon la revendication 7 ou 8, caractérisé en ce que, pour obtenir un effet de nettoyage maximal, on règle la proportion des demi-ondes positives entre 45 et 65 %.

10. Procédé selon la revendication 7, 8 ou 9, caractérisé en ce que l'on règle séparément les intensités des demi-ondes positives et négatives.

11. Procédé selon la revendication 10, caractérisé en ce que l'intensité de la demi-onde positive est réglée entre 100 et 200 A.

12. Procédé selon la revendication 10 ou 11, caractérisé en ce que l'on règle l'intensité de la demi-onde négative entre 250 et 300 A.

13. Procédé selon l'une des revendications précédentes, caractérisé en ce qu'on utilise deux fils qui sont amenés vers la pièce en position oblique en forme de V.
